# EUROPEAN PATENT APPLICATION

(11) **EP 4 807 220 A1**
(43) Date of publication of application: **16.09.2026**
(21) Application number: 26164154.2
(22) Date of filing: 12.03.2026
(51) Int. Cl.: F16H 57/04

(54) **SYSTEM AND METHOD FOR FLUSHING CONTAMINATED LUBRICANT FROM GEAR DRIVEN ROTATING EQUIPMENT**

(30) Priority: 13.03.2025 US 202563771569 P
(71) Applicant: Shumka, Thomas, North Vancouver,BC V7M 2J5 (CA)
(72) Inventor: Shumka, Thomas, North Vancouver,BC V7M 2J5 (CA)
(74) Representative: Michalski Hüttermann & Partner mbB

(57) **Abstract**

A method of flushing contaminated lubricant from gear teeth of an industrial gear set, while leaving a boundary layer of lubricant on the gear teeth, comprising: imaging the contaminated lubricant with at least one imager of an imaging system to provide images; either a user viewing the images and determining that an upper threshold of contamination has been reached or a computer of the imaging system analyzing the images and determining that an upper threshold of contamination has been reached; under control of the user or the computer, activating a controlled pressure washer or a controlled delivery system, which includes nozzles; and spraying a flushing lubricant into the contaminated lubricant on the gear teeth between lubricant delivery times while the industrial gear set is operating under normal operating conditions, thereby flushing contaminated lubricant from the gear teeth, while leaving a boundary layer of lubricant on the gear teeth.

## Description

### FIELD

The present technology is directed to the field of industrial asset maintenance, specifically the flushing of contaminated lubricant from girth gear and pinion teeth on gear driven rotating equipment. More specifically, it is a method to flush out contaminated lubricant during normal operating conditions, while leaving a boundary layer of lubricant on the gears.

### BACKGROUND OF THE INVENTION

Girth gears and pinion systems in industrial applications, such as mining grinding mills, are critical components subjected to extreme operational stress. Over time, these gears accumulate contamination from dust, metal particles, and degraded lubricant, leading to increased wear, misalignment, and potential failure. Traditional cleaning methods often require equipment shutdowns or rely on manual interventions, which are inefficient and hazardous.

All processing facilities that use girth gear driven mills, such as the mining, pulp and paper and cement industry, use large gears. For example, the most common girth gear has helical teeth and is about 3 meters (m) to about 14m in diameter. The pinion gear drives the girth gear. It is much smaller, at about .5m to about 2m diameter. It has helix angles on the gear teeth. Other examples of girth gears are double helical gears and spur gears. Girth gears cannot be readily removed and transported for testing and cleaning. Methods of examining large girth gear teeth to detect surface breaking discontinuities have often been time-consuming and limited in terms of data collected. Methods such as visual and magnetic particle inspection and liquid penetrant testing require up to 24 hours to clean the gear, resulting in down time of up to 40 hours.

Typically, a gear could be inspected as frequently as every six months or as long as every two years, usually dependent on the insurance company's recommendations, which are based on their risk assessment. As these gears cost as much as 400,000 to 1.3 million dollars, an incorrect or inaccurate inspection result can cost the mining, cement or pulp and paper company a significant amount of money. Further, if there is a failure of the gear, this can lead to significant down time. For a copper-molybdenum, gold, or iron ore mine this can be in the range of $20,000 to $100,000 an hour. It normally takes a minimum of 10 to 12 days to change out a gear set, if there is one on site. If not, it could take up to 45 weeks for a replacement. A catastrophic failure in these gear sets could cost the insurer millions of dollars.

A formulation and method for cleaning girth gears is disclosed in US Patent No. 5031648 and 5,146,938. The method is a two-step method involving spraying a thixotropic formulation on the gear while the gear is in operation. The composition comprises at least one terpene being capable of dissolving or softening hardened lubricants and residuals, hydrocarbon solvent, an extreme pressure lubricant and surfactants. The method for cleaning mill gears comprises applying a solution comprising at least one terpene being capable of dissolving or softening soils containing grease or oil, aliphatic hydrocarbon solvent, biodegradable surfactants, an extreme pressure lubricant and thickeners to the area to be cleaned, continuously applying the solution to contact the surface and penetrate and dissolve the surface grease, and thereafter rinsing the surface to remove the dissolved surface greases and the cleaning composition. The initial spraying is carried out during production, with the mill gear operating at full speed, followed by rinsing or wiping as the mill gear is inched. The composition dissolves gear lubricant (Asphaltic) accumulations effectively and in an environmentally acceptable manner as well as a method of cleaning mill gears resulting in significant savings in terms of labor and downtime of the equipment. The solution is safe to use on painted surfaces and emulsifies quickly when sprayed with water-soap solutions. The hydrocarbon solvent includes mineral spirits, which, in the commercial embodiment, Traxol^{®}, is a middle petroleum distillate, which is classified as a VOC. As disclosed, the hydrocarbon solvent also includes aromatics, which are both VOCs and carcinogenic. Phosphorous sulfur compounds are disclosed as the extreme pressure lubricants. These are expensive. The formulation does not work well on synthetic lubricants. The formulation is sprayed on the gear for about 1.5 to 2 hours; hence a large amount of the formulation is required (600-800 liters). Rinsing is done with a detergent-water solution. During the rinsing the gear is inched. This step takes approximately 20 to 30 minutes. During this time, there is no protection for the gear as there are no additives in the rinse solution and as a consequence, this method has been found to damage the gear teeth. Further, there is significant down time while the gears are being cleaned. These formulations and methods are not suitable for removing contaminants from the lubricant while the gear set is operating.

United States Patent No. 10786834 discloses a one-step method of cleaning a girth gear set of a mill in preparation for inspection, the method comprising: substantially emptying the mill; inching the gear; spraying a nonVolatile Organic Compound (non-VOC) cleaning formulation at high pressure onto the gear, the cleaning formulation comprising a non-VOC aliphatic hydrocarbon solvent, an extreme pressure lubricant, a fretting wear lubricant, a non-ionic surfactant, and a mixture of non-VOC unsaturated fatty alcohols; and continuing to spray the non-VOC cleaning formulation on the gear for sufficient time for the formulation to clean the gear, thereby providing a so cleaned gear. It was disclosed that the fretting wear lubricant contained phosphate esters, and the extreme pressure additive contained high percentages of phosphoric acid esters and olefin sulfide. The base oil was a Group II base oil. The inclusion of these two components led to significant improvements in the performance of the formulation with regard to protecting the gear during cleaning. This was tested using ASTM D2783 and ASTM D4172. While these formulations and methods led to a reduction in down time, these formulations and methods are not suitable for removing contaminants from the lubricant while the gear set is operating.

In relation to general cleaning formulations, United States Patent No. 6191087 discloses a solvent that is biodegradable, provides effective solvency for a broad range of tasks and is generally benign to human health. This solvent is a mixture of a lactate ester and an edible oil ester having a closed cup flash point in excess of 60° C and can include other non-halogenated solvents and surfactants. Methyl soyate is disclosed for use in a paint stripping formulation. This formulation is not suitable for removing contaminants from the lubricant while the gear set is operating.

What is needed is a method and installation that uses a formulation to proactively flush contaminants from lubricant on the gears. It would be preferable if the method could be conducted entirely during normal operating conditions. It would be preferable if the flushing could be done in a matter of minutes. It would be preferable if the flushing did not strip the lubricant from the gears and did not clean the gears, hence, it would leave a boundary layer of lubricant on the gear teeth. It would be preferable if it could be applied between lubricant delivery times.

### SUMMARY

Provided is a method that uses a flushing lubricant to proactively flush contaminants from the gears of industrial gear driven rotating equipment. The method can be conducted entirely during normal operating conditions. The flushing can be done in a matter of minutes. The flushing does not strip the lubricant from the gears and does not clean the gears. Instead, it leaves a boundary layer of lubricant on the gear teeth.

In one embodiment, a method of flushing contaminated lubricant from gear teeth of an industrial gear set is provided, while leaving a boundary layer of lubricant on the gear teeth, the method comprising: imaging the contaminated lubricant with at least one imager of an imaging system to provide images; either a user viewing the images and determining that an upper threshold of contamination has been reached or a computer of the imaging system analyzing the images and determining that an upper threshold of contamination has been reached; under control of the user or the computer, activating a controlled pressure washer or a controlled delivery system, which includes nozzles; and spraying a flushing lubricant into the contaminated lubricant on the gear teeth between lubricant delivery times while the industrial gear set is operating under normal operating conditions, thereby flushing contaminated lubricant from the gear teeth, while leaving a boundary layer of lubricant on the gear teeth.

The method may further comprise imaging the lubricant during the flushing of contaminants to determine when a lower threshold of contamination has been reached.

The method may further comprise the controlled delivery system, or the controlled pressure washer ceasing to spray the flushing lubricant in response to the lower threshold of contamination being reached, the ceasing under control of the user or the computer.

In the method, the spraying may be under a pressure of about 50 pounds per square inch (psi) to about 3000 psi.

In the method, the method may be autonomous.

In the method, predictive modeling using artificial intelligence-computer vision models may precede the flushing and may define the upper threshold of contamination and the lower threshold of contamination.

In another embodiment, a method of flushing contaminated lubricant from a girth gear and pinion teeth of a girth gear set is provided, the method comprising:
imaging the contaminated lubricant with at least two imagers selected from an infrared imager, a ultraviolet imager, a hyperspectral imager and a laser surface profiling imager; either a user viewing the images and determining that an upper threshold of contamination has been reached or a computer of the imaging system analyzing the images and determining that an upper threshold of contamination has been reached; activating a controlled delivery system, which includes nozzles or a controlled pressure washer, under control of the user or the computer,
spraying a flushing lubricant into the contaminated lubricant on the girth gear and
pinion teeth between lubricant delivery times while the girth gear set is operating under normal operating conditions, thereby flushing contaminated lubricant from the girth gear and pinion teeth.

The method may further comprise leaving a boundary layer of lubricant on the girth gear and pinion teeth.

The method may further comprise imaging the lubricant during the flushing of contaminated lubricant to determine when a lower threshold of contamination has been reached.

The method may further comprise the controlled delivery system, or the controlled pressure washer ceasing to spray the flushing lubricant in response to the lower threshold of contamination being reached, the ceasing under control of the user or the computer.

The method may be autonomous.

In another embodiment, an installation for imaging and flushing contaminated lubricant from an industrial gear set is provided, the industrial gear set including a driving gear which includes teeth, a driven gear, a gear guard and a gear lubrication system, the installation comprising: a flushing lubricant delivery system, which includes a pressure washer, including a plurality of nozzles, the plurality of nozzles directed to the teeth and the driven gear, a controller in electrical communication with the pressure washer, and a flushing lubricant reservoir, which is in fluid communication with the pressure washer; and a contamination detection system which includes at least two imagers selected from a visible light imager, an infrared imager, a ultraviolet imager, a hyperspectral imager and a laser surface profiling imager, the at least two imagers focused on the teeth and the driven gear, and a computing device in electronic communication with the at least two imagers and the controller, wherein the computing device is configured to analyze imager data and instruct the controller to initiate flushing contaminated lubricant or to display contamination data to a user.

In the installation, the controller may be under control of the computing device.

In the installation, the computing device may be further configured to instruct the controller to cease flushing contaminated lubricant.

In the installation, the computing device may include an artificial intelligence processing unit.

In the installation, the plurality of nozzles may be positioned on the gear guard.

The installation may be integrated into the gear lubrication system.

In another embodiment, an assembly for imaging and flushing contaminated lubricant from an industrial gear set is provided, the industrial gear set including a driving gear which includes teeth, and a driven gear, the assembly comprising: a flushing lubricant delivery system, which includes a pressure washer, including a plurality of nozzles, the plurality of nozzles for directing at the teeth and the driven gear, a controller in electrical communication with the pressure washer, and a flushing lubricant reservoir, which is in fluid communication with the pressure washer; and a contamination detection system which includes at least two imagers selected from a visible light imager, an infrared imager, a ultraviolet imager, a hyperspectral imager and a laser surface profiling imager, and a computing device in electronic communication with the at least two imagers and the controller, wherein the computing device is configured to analyze imager data and instruct the controller to initiate flushing contaminated lubricant or to display contamination data to a user.

In the assembly, the computing device may be further configured to instruct the controller to cease flushing contaminated lubricant.

In the assembly, the computing device may include an artificial intelligence processing unit.

### FIGURES

Figure 1 is a block diagram of one embodiment of the method of the present technology.
Figure 2 is a schematic of the assembly of the present technology.
Figure 3 is a schematic of the installation of the present technology on location of an industrial site having an industrial gear set.
Figure 4 is a block diagram of an alternative embodiment of the method of the present technology.
Figure 5 is a block diagram of another alternative embodiment of the method of the present technology.

### DESCRIPTION

Except as otherwise expressly provided, the following rules of interpretation apply to this specification (written description and claims): (a) all words used herein shall be construed to be of such gender or number (singular or plural) as the circumstances require; (b) the singular terms "a", "an", and "the", as used in the specification and the appended claims include plural references unless the context clearly dictates otherwise; (c) the antecedent term "about" applied to a recited range or value denotes an approximation within the deviation in the range or value known or expected in the art from the measurements method; (d) the words "herein", "hereby", "hereof", "hereto", "hereinbefore", and "hereinafter", and words of similar import, refer to this specification in its entirety and not to any particular paragraph, claim or other subdivision, unless otherwise specified; (e) descriptive headings are for convenience only and shall not control or affect the meaning or construction of any part of the specification; and (f) "or" and "any" are not exclusive and "include" and "including" are not limiting. Further, the terms "comprising," "having," "including," and "containing" are to be construed as open-ended terms (i.e., meaning "including, but not limited to,") unless otherwise noted.

Recitation of ranges of values herein are merely intended to serve as a shorthand method of referring individually to each separate value falling within the range, unless otherwise indicated herein, and each separate value is incorporated into the specification as if it were individually recited herein. Where a specific range of values is provided, it is understood that each intervening value, to the tenth of the unit of the lower limit unless the context clearly dictates otherwise, between the upper and lower limit of that range and any other stated or intervening value in that stated range, is included therein. All smaller sub ranges are also included. The upper and lower limits of these smaller ranges are also included therein, subject to any specifically excluded limit in the stated range.

Unless defined otherwise, all technical and scientific terms used herein have the same meaning as commonly understood by one of ordinary skill in the relevant art. Although any methods and materials similar or equivalent to those described herein can also be used, the acceptable methods and materials are now described.

### DEFINITIONS

Component - In the context of the present technology, a component is a general class of mechanical or electronic parts, such as sensors, control modules, or application mechanisms, that contribute to the operation of the flushing system.

Flushing - in the context of the present technology, flushing refers to adding a flushing lubricant to the contaminated lubricant that is on a gear set such that contaminated lubricant is released from the gear set and washed away. The formulation does not strip the lubricant from the gear, therefore it does not clean the gear. This process is designed to maintain a boundary lubrication layer and is distinct from full-scale gear cleaning.

Contamination detection - in the context of the present technology, contamination detection is the process by which contamination levels are assessed using a combination of computer vision-based imaging, sensor-based analysis, and/or human visual inspection. Human visual inspection may be used as a primary or secondary validation method to confirm contamination levels and ensure effective flushing cycles.

Controlled delivery mechanism - in the context of the present technology, a controlled delivery mechanism is a structured, regulated system for applying the flushing lubricant, either automatically or manually, within predefined system constraints. Manual operator-initiated activation may still occur through system-controlled nozzles, pressure settings, and application limits.

Pressure controlled dispensing - in the context of the present technology, pressure-controlled dispensing is the controlled application of flushing lubricant via precision nozzles or a pressure-regulated delivery mechanism operating within an adjustable pressure range, typically between 50 psi and 3000 psi, depending on contamination levels and system requirements.

Operator initiated activation - in the context of the present technology, operator-initiated activation is a manual control method where an operator can initiate the flushing system through a controlled interface while still adhering to predefined system parameters and pressure ranges.

### DETAILED DESCRIPTION

In one exemplary embodiment, lubricant is automatically sprayed on the gear every 10 minutes to every 30 minutes for about a minute or two. Flushing the gear lubricant with the formulations of the present technology was done between lubricant delivery times, hence the flushing lubricant was sprayed for a maximum of one to nine minutes up to a maximum of 28 or 29 minutes.

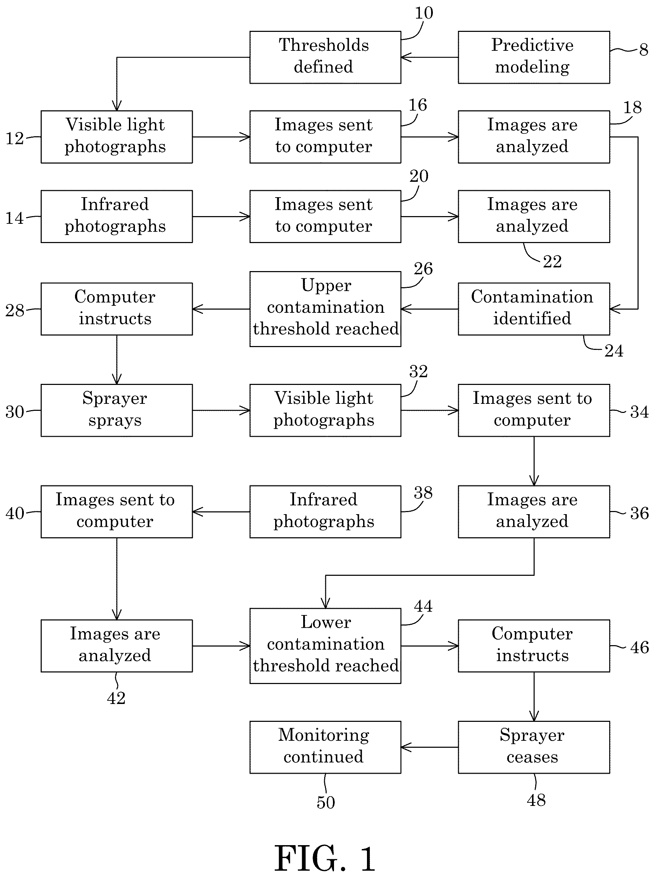

In another embodiment, the imaging system disclosed in US Patent No. 11,893,726, which is incorporated in its entirety by reference, is employed to detect contamination of the lubricant. The sprayer disclosed in US Patent No. 11,893,726 was modified for low pressure spraying of the flushing lubricant. As shown in Figure 1, predictive modeling 8 is used using artificial intelligence-computer vision models to define 10 the upper threshold of contamination and the lower threshold of contamination. A visible light camera photographs 12 the lubricant in the gear set as the mill is operating under normal operating conditions. An infrared camera also photographs 14 the lubricant in the gear set as the mill is operating. Digital images are sent 16 to the computer from the visible light camera and are analyzed 18 by the computer. Contamination is identified 20. Digital images are sent 22 to the computer from the infrared camera and are analyzed 24 by the computer. Increases in temperature are indicative of contamination. Upon reaching 26 a predefined upper threshold for contamination, the computer instructs 28 the sprayer to spray flushing lubricant into the gear set (the girth gear and pinion teeth) at 100 to 1500 PSI. The sprayer sprays 30 flushing lubricant into the gear set between lubricating times. The visible light camera continues to photograph 32 and send 34 digital images to the computer, which analyzes 36 the images. The infrared camera also continues to photograph 38 and send 40 images to the computer which analyzes 42 the images. Once a predefined lower limit of contamination is reached, indicating that sufficient contamination has been removed, the computer instructs 44 the pressure washer to cease spraying the flushing lubricant and the sprayer ceases 46 spraying. Monitoring 48 with the visible light camera and the infrared camera continues and the cycle repeats itself. The entire operation is autonomous, with the computer controlling the lubricating sprayer and the flushing lubricant sprayer.

In an alternative embodiment, only the visible light camera is employed. The entire operation is autonomous with the computer controlling the lubricating sprayer and the flushing lubricant sprayer. The sprayer may be a spray bar, a spray nozzle or the like.

In yet another embodiment, a thermal sensor other than an infrared camera is used along with the visible light camera. In this embodiment, thermal data rather than infrared images are sent to the computer. The entire operation is autonomous with the computer controlling the lubricating sprayer and the flushing lubricant sprayer.

In another embodiment, a worker reviews the images, whether from the visible light camera or both the visible light camera (optical camera) and the infrared camera. Alternatively, digital images from the visible light camera and data from an infrared sensor other than an infrared camera are reviewed.

In yet another embodiment, results from the system and methods disclosed in US Patent Application Publication No. 20230049526, which is incorporated herein in its entirety, are used to predict the amount of lubricant to use, the timing and duration of lubrication, the amount of flushing lubricant to use, and the timing and duration of flushing. The computer develops a lubricating and flushing program and controls the lubricating sprayer and the flushing lubricant sprayer in accordance with the lubricating and flushing program.

In all embodiments, the timing of lubricating and the timing of flushing is dependent upon a number of factors including the type of gear, the degree of contamination, the milling application and the type of lubricant used. The gears operate under normal operating conditions during the flushing. The formulation is sprayed on the gear using low pressures of between 50 psi to 3000 psi. The flushing lubricant blends with the lubricant and flushes the contaminants from the lubricant without cleaning the gear. The method helps prevent unscheduled downtime.

The lubricating is high volume lubricating to ensure lubrication under extreme conditions. High-volume systems may dispense several liters of lubricant per interval to maintain a film onto the gear. The flushing lubricant flushes contaminated lubricant from the gears while leaving a boundary layer of lubricant on the gear teeth.

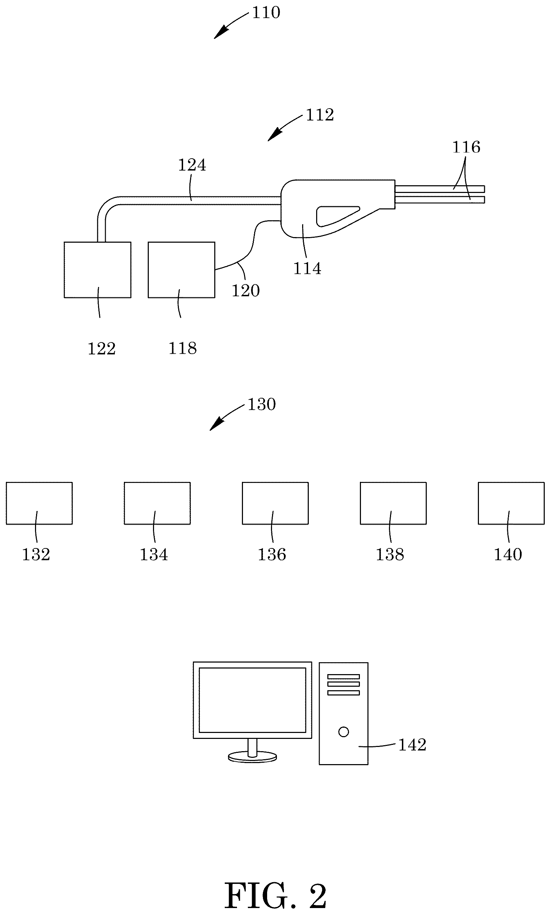

As shown in Figure 2, an assembly, generally referred to as 110 is for use with a large industrial open gear set. It includes a flushing lubricant delivery system, generally referred to as 112, which includes a pressure washer 114, including a plurality of nozzles 116, the plurality of nozzles for directing at the teeth and the driven gear, a controller 118 in electrical communication via power cables 120 with the pressure washer 114, and a flushing lubricant reservoir 122, which is in fluid communication with the pressure washer 114 via at least one hose 124. A contamination detection system, generally referred to as 130 includes a visible light imager 132, an infrared imager 134, an ultraviolet imager 136, a hyperspectral imager 138 a laser surface profiling imager 140, a vibration sensor 142 and a computing device 144. The computing device 144 is configured to be in electronic communication with the imagers 132, 134, 136, 138, 140, the vibration sensor 142 and the controller 118. Communication may be wired or wireless. If wireless, the computing device 144 could be cloud computing.

In an alternative embodiment, there are two or more imagers. In another embodiment, there are three or more imagers. In yet another embodiment, there are four or more imagers.

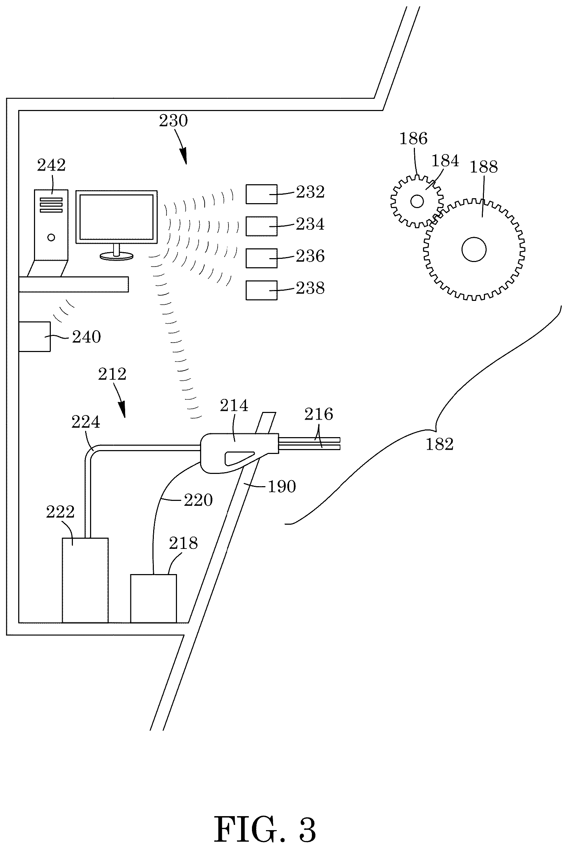

As shown in Figure 3, an installation, generally referred to as 180 is installed at an industrial site where there is an industrial open gear set, generally referred to as 182. The industrial gear set 182 includes a driving gear 184 with teeth 186, a driven gear 188 and a gear guard 190. The installation 180 includes a flushing lubricant delivery system, generally referred to as 212, which includes a pressure washer 214, including a plurality of nozzles 216, the plurality of nozzles for directing at the teeth and the driven gear, a controller 218 in electrical communication via power cables 220 with the pressure washer 214, and a flushing lubricant reservoir 222, which is in fluid communication with the pressure washer 214 via at least one hose 224. The pressure washer 214 is located on the gear guard 190 such that the nozzles 216 are directed to the teeth 186 and the drive gear 188. A contamination detection system, generally referred to as 230 includes a visible light imager 232, an infrared imager 234, a ultraviolet imager 236, a hyperspectral imager 238, a laser surface profiling imager 240, and a vibration sensor 242, which may be an acoustic emission sensor and a computing device 244. The imagers 232, 234, 236, 238, 240 are focused on the teeth 186 and the driven gear 188. The computing device 242 is in electronic communication with the imagers 232, 234, 236, 238, 240, the vibration sensor 242 and the controller 218. Communication may be wired or wireless. If wireless, the computing device 244 could be cloud computing.

In an alternative embodiment, there are two or more imagers. In another embodiment, there are three or more imagers. In yet another embodiment, there are four or more imagers.

In another alternative embodiment, the installation is integrated into the gear lubrication system. The installation comprises precision nozzles or controlled delivery mechanisms for targeted flushing, an integrated control system, and contamination monitoring sensors. It seamlessly integrates into existing lubrication cycles or operates in parallel, ensuring continuous operation without downtime.

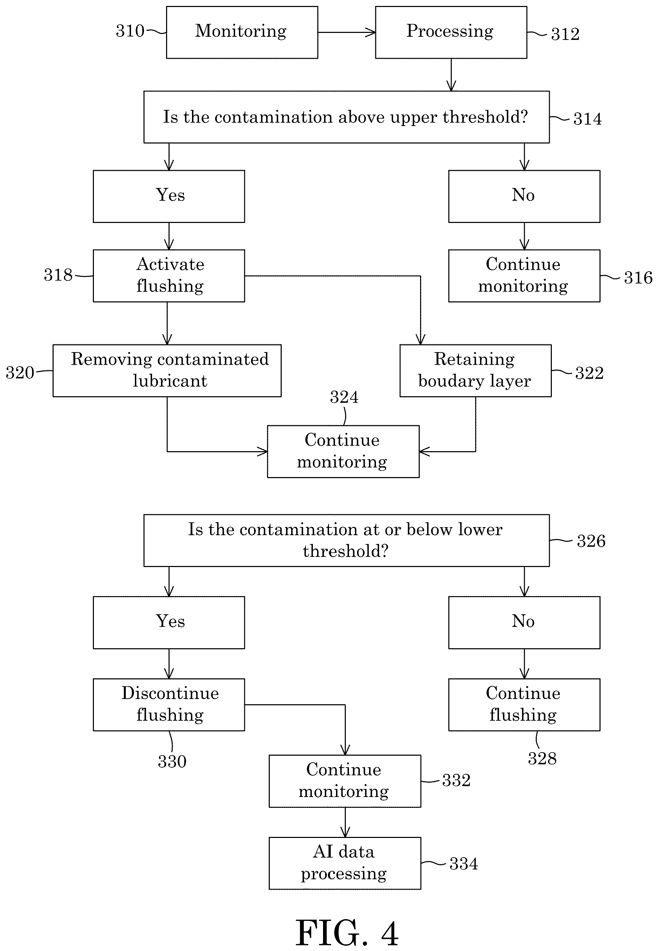

As shown in Figure 4, in an alternative embodiment of the method, the imagers 132-138 and sensor 140 monitor 310 the surfaces of the gears. Artificial intelligence-computer vision processes 312 the data from the imagers and sensors in real-time. It is queried 314, "Is the contamination above the upper threshold?" If No, continue monitoring 316. If Yes, then the flushing lubricant delivery system 112 is activated 318. The contaminated lubricant is removed 320. The Boundary layer remains 322 on the gears. Imagers 132-138 and sensor 140 continue to monitor 324 the surfaces of the gears. It is queried 326, "Is the contamination at or below the predefined lower threshold?" If No, continue 328 to deliver flushing lubricant. If Yes, then discontinue 330 delivery of the flushing lubricant. Imagers 132-138 and sensor 140 continue to monitor 332 the surfaces of the gears and the Artificial intelligence-computer vision continues to process 334 the data from the imagers and sensor in real-time.

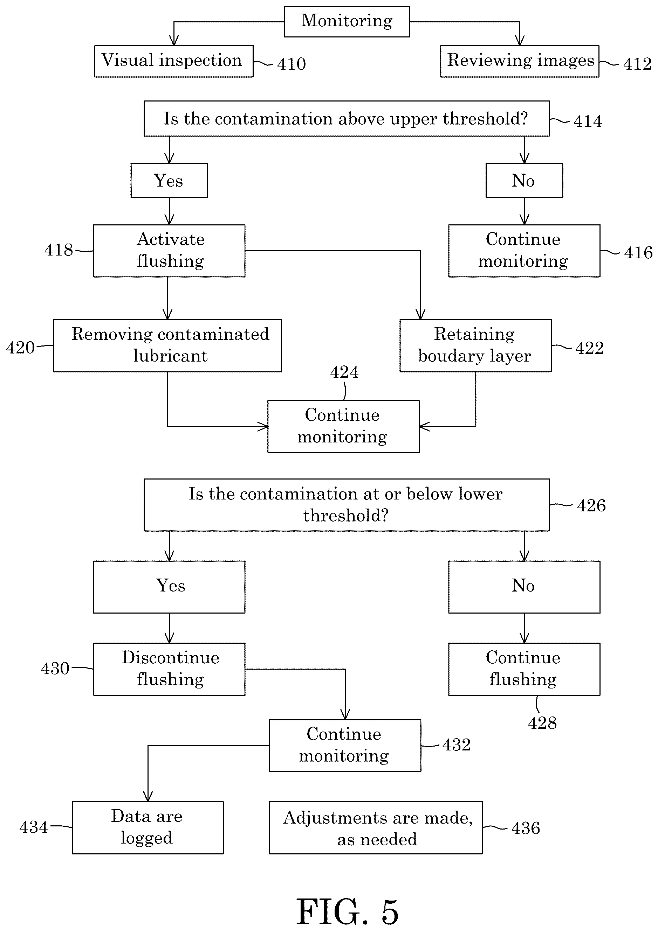

As shown in Figure 5, in another embodiment of the method, a user monitors the surface of the gears, either by visual inspection 410 of the gears or by reviewing 412 the images from the imagers 132-138 and the data from the sensor 140. The user queries 414, "Is the contamination above the upper threshold?" If No, continue monitoring 416. If Yes, the flushing lubricant delivery system 112 is activated 418 by the user. The contaminated lubricant is removed 420. The boundary layer (or film) remains 422 on the gears. The user continues to monitor 424 the surfaces of the gears. The user queries 426, "Is the contamination at or below the predefined lower threshold?" If No, continue 428 to deliver flushing lubricant. If Yes, then discontinue 430 delivery of the flushing lubricant. The user continues monitoring 432 on a pre-determined schedule. Data are logged 434 in terms of time between flushing and duration of flushing. Adjustments 436 are made to the schedule and duration of flushing as needed.

While example embodiments have been described in connection with what is presently considered to be an example of a possible most practical and/or suitable embodiment, it is to be understood that the descriptions are not to be limited to the disclosed embodiments, but on the contrary, is intended to cover various modifications and equivalent arrangements included within the spirit and scope of the example embodiment. Those skilled in the art will recognize or be able to ascertain using no more than routine experimentation, many equivalents to the specific example embodiments specifically described herein. Such equivalents are intended to be encompassed in the scope of the claims, if appended hereto or subsequently filed.

## Claims

1. A method of flushing contaminated lubricant from gear teeth of an industrial gear set, while leaving a boundary layer of lubricant on the gear teeth, the method comprising: imaging the contaminated lubricant with at least one imager of an imaging system to provide images; either a user viewing the images and determining that an upper threshold of contamination has been reached or a computer of the imaging system analyzing the images and determining that an upper threshold of contamination has been reached; under control of the user or the computer, activating a controlled pressure washer or a controlled delivery system, which includes nozzles; and spraying a flushing lubricant into the contaminated lubricant on the gear teeth between lubricant delivery times while the industrial gear set is operating under normal operating conditions, thereby flushing contaminated lubricant from the gear teeth, while leaving a boundary layer of lubricant on the gear teeth.

2. The method according to claim 1, further comprising imaging the lubricant during the flushing of contaminants to determine when a lower threshold of contamination has been reached.

3. The method according to claim 1 or claim 2, further comprising the controlled delivery system, or the controlled pressure washer ceasing to spray the flushing lubricant in response to the lower threshold of contamination being reached, the ceasing under control of the user or the computer.

4. The method according to any one of the previous claims, wherein the spraying is under a pressure of 3,45 bar (50 pounds per square inch (psi)) to 206,84 bar (3000 psi).

5. The method according to any one of the previous claims, wherein the method is autonomous.

6. The method according to any one of the previous claims, wherein predictive modeling using artificial intelligence-computer vision models is performed before flushing and is used to define the upper and lower contamination thresholds.

7. The method according to any one of the previous claims, wherein the imaging system comprises at least two imagers selected from an infrared imager, a ultraviolet imager, a hyperspectral imager and a laser surface profiling imager;

8. The method of according to any one of the previous claims, further comprising leaving a boundary layer of lubricant on the girth gear and pinion teeth and / or comprising imaging the lubricant during the flushing of contaminated lubricant to determine when a lower threshold of contamination has been reached.

9. The method according to any one of the previous claims, wherein the industrial gear set is a girth gear set which comprises a girth gear and a pinion.

10. The method according to any one of the previous claims, wherein the computing device displays contamination data to a user.

11. An assembly for imaging and flushing contaminated lubricant from an industrial gear set, the industrial gear set including a driving gear which includes teeth, and a driven gear, the assembly comprising: a flushing lubricant delivery system, which includes a pressure washer, including a plurality of nozzles, the plurality of nozzles for directing at the teeth and the driven gear, a controller in electrical communication with the pressure washer, and a flushing lubricant reservoir, which is in fluid communication with the pressure washer; and a contamination detection system which includes at least two imagers selected from a visible light imager, an infrared imager, a ultraviolet imager, a hyperspectral imager and a laser surface profiling imager, and a computing device in electronic communication with the at least two imagers and the controller, wherein the computing device is configured to analyze imager data and instruct the controller to initiate flushing contaminated lubricant or to display contamination data to a user.

12. The assembly of claim 11, wherein the computing device is further configured to instruct the controller to cease flushing contaminated lubricant.

13. The assembly of claim 11 or 12, wherein the computing device includes an artificial intelligence processing unit.
